Europäisches Patentamt

European Patent Office

Office européen des brevets

(11) Veröffentlichungsnummer: **0 516 945 A2**

# EUROPÄISCHE PATENTANMELDUNG

(21) Anmeldenummer: **92106123.0**

(22) Anmeldetag: **09.04.92**

(51) Int. Cl.5: **F16L 9/00**

(30) Priorität: **04.06.91 DE 4118250**

(43) Veröffentlichungstag der Anmeldung:
**09.12.92 Patentblatt 92/50**

(84) Benannte Vertragsstaaten:
**AT CH DE FR GB IT LI**

(71) Anmelder: **METU-System Meinig KG**
**Seitinger Strasse 186**
**W-7201 Rietheim-Weilheim 2(DE)**

(72) Erfinder: **Meinig, Manfred**
**Seitinger Strasse**
**W-7201 Rietheim-Weilheim 2(DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**W-7730 VS-Villingen-Schwenningen(DE)**

(54) **Verstrebungsvorrichtung für Luftkanäle aus Blech.**

(57) Verstrebungsvorrichtung für gegenüberliegende Wände von Luftkanälen aus Blech, wobei eine Gewindestange als Strebe dient, die mittels Innen- und Außengewinde aufweisender Gewindeköpfe an den Kanalwänden festgelegt wird. Das Innengewinde wird auf die Enden der Gewindestange aufgeschraubt, während das Außengewinde selbstschneidend in entsprechende Löcher der Kanalwände eingefurcht wird.

Die Erfindung betrifft eine Verstrebungsvorrichtung für gegenüberliegende Wände von Luftkanälen aus Blech nach dem Oberbegriff des Anspruchs 1.

Luftkanäle werden aus dünnen Blechen hergestellt, um Material und Gewicht einzusparen. Die Gewichtseinsparung wirkt sich beim Transport zu und auf einer Baustelle sowie bei der geringeren Belastung der Aufhängekonstruktion vorteilhaft aus. Nachteilig ist die geringe Blechstärke im Hinblick auf die Stabilität eines Luftkanals gegen Innendruck oder bei Absaugkanälen gegen Außendruck sowie gegen wechselnde Belastungen durch pulsierende Luftströmung. Es gibt Vorschriften und Normen, wonach unter Druck stehende Luftkanäle sich nur um vorbestimmte Werte ausbauchen oder einbeulen dürfen. Bekannt und sehr gefürchtet ist ein donnerndes Geräusch beim Einschalten des angeschlossenen Ventilators, das durch fast gleichzeitiges Ausbauchen oder Einbeulen aller Kanalwände und das damit verbundene Umschnappen hervorgerufen wird. Problematisch ist auch ein ständiges Flattern von Kanalwänden, insbesondere, wenn diese von außen sichtbar sind.

Um diese Erscheinungen zu vermeiden, wurden im Kanalbau verschiedene Versteifungsmaßnahmen entwickelt. Vorliegende Erfindung geht von einer Verstrebungsvorrichtung der eingangs genannten Art aus, die nach Bedarf an den Stellen der Kanalflächen angebracht wird, an welchen die stärkste Aus- oder Einbeulung zu erwarten ist. Auch direkt neben den Flanschen zum Verbinden aufeinanderfolgender Kanalabschnitte werden solche Verstrebungsvorrichtungen häufig eingebaut, um eine übermäßige Durchbiegung der Flansche zu verhindern. Da insbesondere bei größeren Luftkanälen verhältnismäßig viele solche Verstrebungsvorrichtungen angebracht werden müssen, ist eine kostengünstige Herstellung sowie einfache und sichere Anbringung der Verstrebungsvorrichtungen erwünscht.

Bei einer bekannten Verstrebungsvorrichtung der eingangs genannten Art werden zur Festlegung der Gewindestange an den Kanalwänden an beiden Enden äußere und innere Muttern mit großen Unterlagsscheiben verwendet. Es ist verhältnismäßig schwierig und zeitaufwendig, die im Kanalinnern liegenden Muttern in eine solche Stellung zu bringen, daß die Gewindestange in die Löcher der Kanalwände eingeführt werden kann. Auch die Einstellung der richtigen Lage der Kanalwände in der endgültig verschraubten Form verursacht Schwierigkeiten.

Andere bekannte Verstrebungsvorrichtungen arbeiten anstelle der inneren Muttern mit einem durchgehenden Rohr, was zwar sehr stabil, aber kostspielig ist. Auch Verstrebungsvorrichtungen mit Rohren, in deren Enden Muttern eingepresst oder ein Gewinde eingeschnitten wird, sind mit einem großen Herstellungs- und Montageaufwand verbunden.

Allen bekannten Lösungen gemeinsam ist der entscheidende Nachteil, daß die Streben nicht von der Kanalaußenseite her eingebaut werden können. Die Strebe muß immer zuerst in das Kanalinnere eingeführt und dann von außen mit Schrauben oder Muttern befestigt werden. Dies ist nicht nur zeitaufwendig und muß oft von zwei Personen ausgeführt werden, sondern es erweist sich oft als unmöglich, wenn nämlich die Kanalhöhe nicht für das Hineinkriechen eines Menschen ausreicht oder der jeweilige Kanalabschnitt so lang ist, daß seine Mitte auch mit Hilfsmitteln von den Enden her nicht zu erreichen ist. Gegenwärtig immer häufiger verwendete Luftkanäle mit flachovalem Querschnitt weisen Höhen bis hinab zu 100 mm und Längen der Kanalabschnitte bis zu 5 m auf. Gerade bei diesen flachovalen Luftkanälen ist eine Verstrebung der großen ebenen Flächen unbedingt erforderlich. Ein Bekriechen solcher Kanäle sowie auch eine Montage von den Enden des Kanals her ist so meist unmöglich. Selbst bei runden Luftkanälen oder Lüftungsrohren werden oft Streben eingebaut, auch wenn sie manchmal nur zur Aufhängung dienen. Auch hier ist bei kleineren Rohrdurchmessern und Längen der Kanalabschnitte bis zu 6 m ein Bekriechen oder Montieren von den Enden her unmöglich.

Der Erfindung liegt daher die Aufgabe zugrunde, eine Verstrebungsvorrichtung für Luftkanäle aus Blech zu schaffen, die von der Kanalaußenseite her eingebaut und aus preisgünstigem, beim Kanalbau in der Regel immer verfügbarem Material hergestellt werden kann.

Diese Aufgabe wird erfindungsgemäß durch die Merkmale des Anspruchs 1 gelöst.

Als Strebenmaterial können auf dem Markt relativ günstig erhältliche Gewindestangen verwendet werden. Solche Gewindestangen werden im Kanalbau häufig verwendet, unter anderem auch als Aufhängematerial. Die feste Verbindung der Gewindestange mit der Kanalwand erfolgt erfindungsgemäß durch ein einziges Schrauborgan in Form eines besonders ausgebildeten Gewindekopfes. Während des Aufschraubens des Gewindekopfes auf das Ende der Gewindestange von außen her furcht sich das konische Außengewinde selbst ein Gewinde in die Umfangswand des Lochs in der Kanalwand. Zuerst wird ein Gewindekopf auf ein Ende der Gewindestange aufgeschraubt. Sodann wird die Gewindestange durch die beiden gegenüberliegenden Löcher in der Kanalwand gesteckt und der bereits auf die Gewindestange aufgeschraubte erste Gewindekopf in die Kanalwand eingeschraubt. Anschließend wird der zweite Gewindekopf von der gegenüberliegenden Außenseite her auf das andere Ende der Gewindestange aufgeschraubt. Sobald das Außengewinde die Kanalwand berührt, verändert sich beim Weiterdrehen dieses zweiten Gewindekopfes die Lage der Kanalwand bezüglich der Strebe nicht mehr, da Außengewinde und Innengewinde gleiche Steigung besitzen. Die erfindungsgemäße Verstrebungsvorrichtung ermöglicht es, grundsätzlich die beiden gegenüberliegenden Kanalwände in jedem beliebigen gegenseitigen Abstand zu verstreben. Man muß nur beim Montieren darauf achten, daß im Augenblick des Anfädelns des Außengewindes des zweiten Gewindekopfes an der zugehörigen Kanalwand die beiden Kanalwände den richtigen Abstand haben. Wegen der gleichen Steigung des Außen- und Innengewindes verändert sich beim weiteren Einschrauben der Kanalwandabstand nicht mehr.

Wenn die Gewindestange nicht schon vorher in der richtigen Länge zugeschnitten worden ist, kann ein eventuell überstehendes Ende der Gewindestange nach fertiger Montage abgetrennt werden. Es kann aber auch stehenbleiben und als Aufhängung verwendet werden. Das ist insbesondere bei Rundrohren sehr zweckmäßig.

Die Maßangaben der Ansprüche 2 und 3 gewährleisten ein besonders günstiges Funktionieren der erfindungsgemäßen Verstrebungsvorrichtung.

Zum bequemen Einschrauben des Gewindekopfes mittels Werkzeugen kann nach Anspruch 4 ein Mehrkantabschnitt vorgesehen werden, der nach dem Einschrauben an der Außenseite der Kanalwand fest zur Anlage kommt.

Meist ergibt sich bereits durch das Einschneiden des Außengewindes in das Loch der Kanalwand eine ausreichende Abdichtung des Luftkanals. Wenn jedoch eine zusätzliche Abdichtung erwünscht ist, so kann sie gemäß Anspruch 5 zwischen dem Mehrkantabschnitt und der Kanalwand angeordnet werden.

Zur Erleichterung des Einschraubens und zur Verhinderung eines sogenannten Fressens des Gewindes wird in vorteilhafter Weiterbildung der Erfindung wenigstens der das Außengewinde tragende Gewindeabschnitt aus gehärtetem Stahl hergestellt. Es kann aber auch der gesamte Gewindekopf aus gehärtetem Stahl bestehen, wenn dies in besonderen Fällen für erforderlich gehalten wird.

Damit sich der zuerst auf die Gewindestange aufgeschraubte Gewindekopf beim Aufschrauben und Festziehen des zweiten Gewindekopfes nicht weiter auf der Gewindestange drehen kann und dadurch seine Lage verändert, wird er zweckmäßigerweise in Aufschraubrichtung auf der Gewindestange fixiert. Dies kann in zweckmäßiger Weise durch die Maßnahmen gemäß den Ansprüchen 7 und 8 erfolgen. Dabei wird der Gewindekopf erst so auf die Gewindestange aufgeschraubt, daß sein äußeres Ende, vorzugsweise die Außenfläche des Mehrkants, mit dem Ende der Gewindestange bündig liegt. Sodann kann durch Hammerschläge auf die Außenseite eine Vernietung in dieser Lage erfolgen. Es kann aber auch die Mittelbohrung des Gewindekopfes nur teilweise mit einem Innengewinde versehen sein, so daß eine weitere Drehung über das Ende des Innengewindes hinaus nicht möglich ist. Der gleiche Zweck wird erreicht, wenn die Mittelbohrung nicht durchgeht, sondern aus einer Sackbohrung besteht.

Anhand der Figuren werden Ausführungsbeispiele der Erfindung näher erläutert. Es zeigen:

Fig. 1 einen schematischen Schnitt durch eine in eine in einen Luftkanal eingebaute Ausführungsform der erfindungsgemäßen Verstrebungsvorrichtung,

Fig. 2 eine Seitenansicht eines bei der Verstrebungsvorrichtung gemäß Fig. 1 verwendeten Gewindekopfes,

Fig. 3 einen Axialschnitt durch den in Fig. 2 gezeigten Gewindekopf,

Fig. 4 bis 6 Axialschnitte durch drei unterschiedliche Ausführungsformen eines auf ein Ende einer Gewindestange aufgeschraubten Gewindekopfes, sowie

Fig.7 und 8 schematische Teilschnitte zur Erläuterung des Aufschraubvorganges eines bei der erfindungsgemäßen Vorrichtung verwendeten Gewindekopfes.

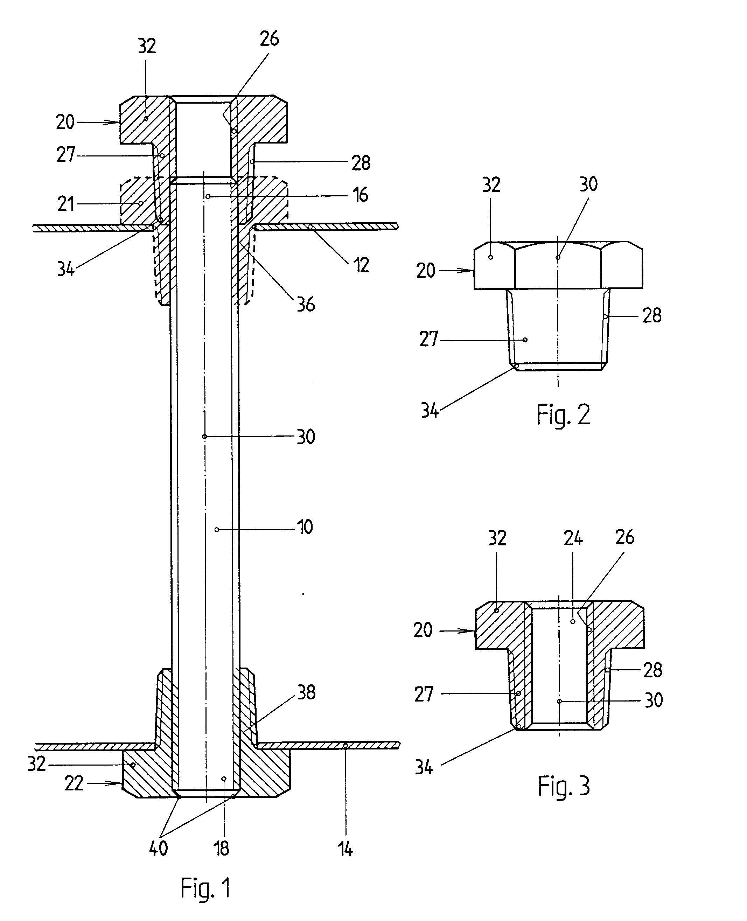

Bei der in den Figuren 1 bis 3 dargestellten Ausführungsform der Erfindung wird eine handelsübliche Gewindestange 10 als Strebe zwischen zwei einander gegenüberliegenden Kanalwänden 12 und 14 verwendet. Auf beide Enden 16, 18 der Gewindestange 10 ist je ein allgemein mit 20 bzw. 22 bezeichneter Gewindekopf aufgeschraubt. Jeder Gewindekopf weist eine durchgehende axiale Mittelbohrung 24 auf, die mit einem durchgehenden, auf das Gewinde der Gewindestange 10 passenden Innengewinde 26 versehen ist. An seiner Außenseite weist jeder Gewindekopf 20, 22 einen Gewindeabschnitt 27 mit leicht konischem Außengewinde 28 auf. Die Hüllfläche des Außengewindes 28 schließt mit der Mittelachse 30 der Gewindestange 10 und der Gewindeköpfe 20, 22 einen Winkel von etwa 2° ein. Nach außen schließt sich an den Gewindeabschnitt 27 jeweils ein radial über diesen vorstehender Sechskantabschnitt 32 an, der von einem entsprechenden Schlüssel erfasst und gedreht werden kann. Der Durchmesser des Außengewindes 28 nimmt vom Sechskantabschnitt 32 zum freien inneren Ende 34 des Gewindeabschnitt 27 hin ab.

Aus der in Fig. 1 in ausgezogenen Linien dargestellten Stellung vollständig außerhalb der Kanalwand 12, in der der Gewindekopf 20 bereits anfänglich auf das Ende 16 der Gewindestange 10 aufgeschraubt ist, wird dieser weiter auf die Gewindestange 10 und gleichzeitig in ein Loch 36 der Kanalwand 12 in die in Fig. 1 in gestrichelten Linien dargestellte Stellung 21 eingeschraubt. Der größte Kerndurchmesser des Außengewindes 28 nahe dem Sechskantkopf 32 entspricht dabei etwa dem Durchmesser des Lochs 36 in der Kanalwand 12. Beim Einschrauben furcht sich das Außengewinde 28 sein eigenes Gewinde in das Loch 36 der Kanalwand 12. Durch das leichte Zunehmen des Durchmessers des Gewindes 28 sitzt dieses dicht im Loch 36 und in der voll eingeschraubten Stellung 21 liegt der Sechskantabschnitt 32 fest an der Außenseite der Kanalwand 12 an. Das Ende 16 der Gewindestange 10 liegt nach dem vollständigen Einschrauben des Gewindekopfes 20 bündig mit der Außenseite des Sechskantabschnitts 32.

Bereits vor dem Aufschrauben des Gewindekopfes 20 ist der Gewindekopf 22 auf das entgegensetzte Ende 18 der Gewindestange 10 aufgeschraubt und in ein dem Loch 36 entsprechendes Loch 38 der Kanalwand 14 eingeschraubt worden. Während dieses Einschraubvorganges durchsetzt das Ende 16 der Gewindestange 10 das Loch 36 in der gegenüberliegenden Kanalwand 12. Anschließend kann der andere Gewindekopf 20 in der beschriebenen Weise in das Loch 36 eingeschraubt werden.

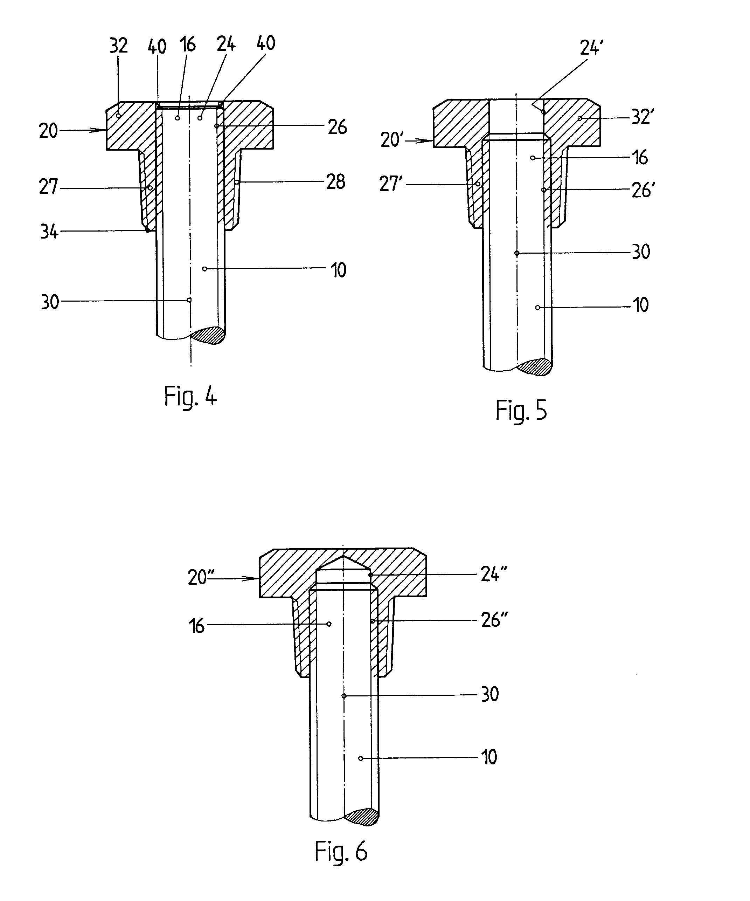

Damit sich die Gewindestange 10 beim Aufschrauben des Gewindekopfes 20 in dem bereits vorher aufgeschraubten Gewindekopf 22 nicht mehr weiter drehen kann, ist der Gewindekopf 22 auf dem Ende 18 der Gewindestange 10 durch einige Hammerschläge auf die Außenseite des Sechskantabschnitts 32 vernietet. Durch die Hammerschläge erhält das äußere Ende des Innengewindes 26 nach innen in die Bahn der Gewindestange 10 gedrückte Nietränder 40, durch welche die Gewindestange 10 in Einschraubrichtung festgelegt wird. Der gleiche Vorgang kann nach dem vollständigen Einschrauben des gegenüberliegenden Gewindekopfes 20 auch bei diesem erfolgen, wie aus Fig. 4 ersichtlich, so daß die Verstrebungsvorrichtung vollständig festsitzt.

Statt durch Vernieten kann die Fixierung der Gewindeköpfe auch durch entsprechende Ausbildung des Innengewindes erreicht werden. Bei der Ausführungsform gemäß Fig. 5 weist der Gewindekopf 20' mit Gewindeabschnitt 27' und Sechskantabschnitt 32' zwar ebenfalls eine durchgehende Mittelbohrung 24' auf. Das Gewinde 26' ist jedoch nur über eine die Länge des Gewindeabschnitts 27' geringfügig übersteigende Strecke in die Mittelbohrung 24' eingeschnitten. Wenn das Ende 16 der Gewindestange 10 das Ende des Innengewindes 26' erreicht, wie in Fig. 5 dargestellt, ist der Gewindekopf 20' gegen ein weiteres Aufschrauben auf die Gewindestange festgelegt.

Statt dessen ist bei der Ausführungsform gemäß Fig. 6 die Mittelbohrung 24'' als Sackbohrung im Gewindekopf 20'' vorgesehen, wobei das Innengewinde 26'' kurz vor dem Ende der Sackbohrung endet. Auch hier ist ein weiteres Aufdrehen des Gewindekopfes 20'' nicht mehr möglich, wenn das Ende 16 der Gewindestange 10 das Ende des Innengewindes 26'' erreicht.

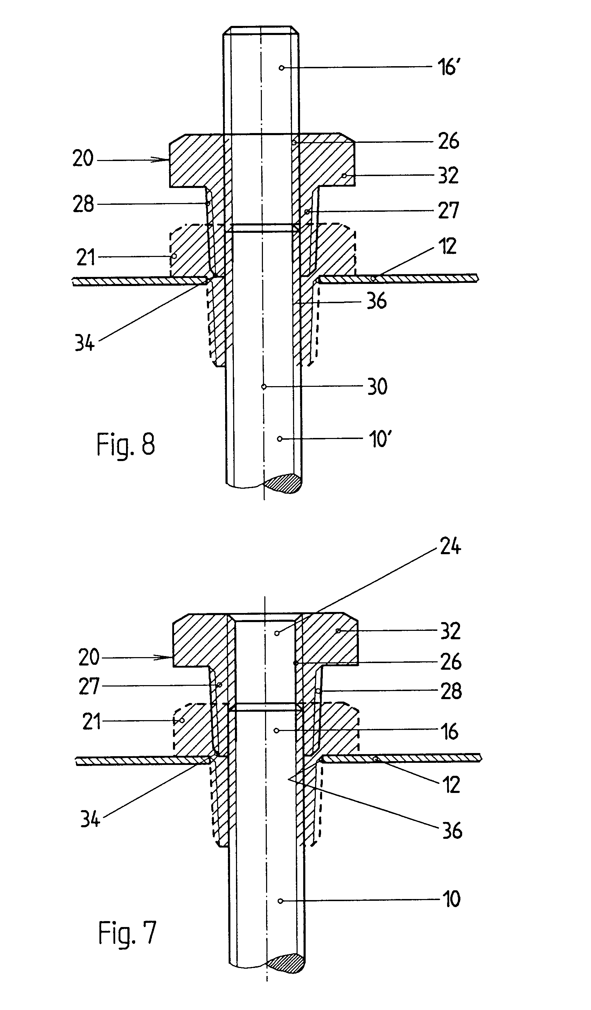

Anhand der einem Teil der Fig. 1 entsprechenden Fig. 7 wird das Aufschrauben des Gewindekopfes 20 und das genaue Festlegen der Kanalwand 12 näher erläutert. Es wird dabei angenommen, daß der in Fig. 1 unten gezeichnete Gewindekopf 22 bereits fest auf das untere Ende 18 der Gewindestange 10 aufgeschraubt und in das Loch 38 der Kanalwand 14 eingeschraubt ist. Das Ende 16 der Gewindestange 10 steht dann in der in Fig. 7 gezeigten Weise durch das Loch 36 der Kanalwand 10 nach außen. In dieser Lage wird zunächst das Innengewinde 26 des Gewindekopfes 20 so weit auf das Ende 16 der Gewindestange 10 aufgeschraubt, bis der Gewindekopf die in Fig. 7 dargestellte Lage erreicht, in der das innere Ende 34 des Gewindeabschnitts 27 die Ebene der Kanalwand 12 berührt. Bei weiterem Aufschrauben des Gewindekopfes 20 auf die Gewindestange 10 wird nun das Außengewinde 28 des Gewindeabschnitts 27 in das Loch 36 der Kanalwand 12 eingefädelt. In diesem Augenblick wird der endgültige Abstand zwischen den Kanalwänden 12 und 14 festgelegt. Vor dem Einfädeln können die Kanalwände 12 und 14 in den gewünschten gegenseitigen Abstand gebracht werden. Im Moment des Einfädelns liegt dieser Abstand fest und ändert sich bei weiterem Einschrauben des Gewindekopfes 20 nicht mehr, da das Innegewinde 26 und das Außengewinde 28 die gleiche Steigung besitzen. Wenn die Kanalwände 12 nicht verbogen sind od.dgl., sondern in der unbelasteten gegenseitigen Lage verbleiben sollen, wird der Gewindekopf 20 zunächst bis zu einer Tiefe auf das Ende 16 der Gewindestange 10 aufgeschraubt, die der Höhe des Sechskantabschnitts 32 entspricht (in ausgezogenenen Linien dargestellte Stellung des Gewindekopfes 20 in Fig. 7). Anschließend erfolgt das Einfädeln des Außengewindes 28 in das Loch 36 und ein vollständiges Aufschrauben des Gewindekopfes 20, bis er die in gestrichelten Linien gezeichnete Stellung 21 erreicht. Bei diesem endgültigen Auf- und Einschrauben ändert sich die Lage der Kanalwand 12 bezüglich der Gewindestange 10 nicht mehr.

Wenn die Gewindestange 10' nicht von vornherein die genau richtige Länge besitzt, sondern gemäß Fig. 8 mit ihrem Ende 16' nach außen über den in der voll eingeschraubten Stellung 21 befindlichen Gewindekopf 20 hinaussteht, kann das überstehende Ende 16' entweder nach dem endgültigen Verschrauben abgenommen werden oder es kann für das Einhängen an einer nicht dargestellten Aufhängvorrichtung für den Luftkanal verwendet werden.

**Patentansprüche**

1. Verstrebungsvorrichtung für gegenüberliegende Wände von Luftkanälen aus Blech mit rechteckigem, rundem oder flachovalem Querschnitt, welche eine Strebe in Form einer Gewindestange aufweist, deren beide Enden je ein Loch in den Kanalwänden durchsetzen und mittels auf die Gewindestange geschraubter Schrauborgane an den gegenüberliegenden Wänden befestigt sind, **dadurch gekennzeichnet**, daß die Schrauborgane aus je einem Gewindekopf (20,20',20''; 22) bestehen, der eine Mittelbohrung (24,24',24'') mit zum Gewinde der Gewindestange (10) passendem Innengewinde (26,26',26'') und einen mit einem Außengewinde (28) gleicher Steigung wie das Innengewinde (26,26'26'') versehenen Gewindeabschnitt (27,27') aufweist, dessen Durchmesser in Einschraubrichtung des Gewindekopfes (20,20',20'') konisch abnimmt, wobei der größte Kerndurchmesser des Außengewindes (28) etwa dem Durchmesser des Loches (36,38) in der zugehörigen Kanalwand (12,14) entspricht.

2. Vorrichtung nach Anspruch 1, dadurch gekennzeichnet, daß der kleinste Außendurchmesser des Außengewindes (28) geringfügig kleiner als der oder gleich dem Durchmesser des Loches (36,38) ist.

3. Vorrichtung nach Anspruch 1 oder 2, dadurch gekennzeichnet, daß die Konizität des Außengewindes (28) etwa 1° bis 3°, vorzugsweise 2° beträgt.

4. Vorrichtung nach einem der vorangehenden Ansprüche, dadurch gekennzeichnet, daß an das größeren Durchmesser besitzende Ende des Gewindeabschnitts des Gewindekopfes (20,20',20'';22) ein über diesen radial vorspringender Mehrkantabschnitt (32) anschließt.

5. Vorrichtung nach Anspruch 4, dadurch gekennzeichnet, daß zwischen Mehrkantabschnitt (32) und Kanalwand (12,14) eine den Gewindeabschnitt (27) umfassende Dichtung eingefügt ist.

6. Vorrichtung nach einem der vorangehenden Ansprüche, dadurch gekennzeichnte, daß wenigstens der Gewindeabschnitt (27) des Gewindekopfes (20,20',20'';22) aus gehärtetem Stahl besteht.

7. Vorrichtung nach einem der vorangehenden Ansprüche, dadurch gekennzeichnet, daß die Mittelbohrung (24,24') den Gewindekopf (20,20';22) vollständig durchsetzt und mit der bündig eingeschraubten Gewindestange (10) vernietet (40) oder nur teilweise mit einem Innengewinde (26') versehen ist.

8. Vorrichtung nach einem der Ansprüche 1 bis 6, dadurch gekennzeichnet, daß die Mittelbohrung (24'') aus einer Sackbohrung besteht.

Fig. 1

Fig. 2

Fig. 3

EP 0 516 945 A2

Fig. 4

Fig. 5

Fig. 6

7

Fig. 8

Fig. 7